(19) **Europäisches Patentamt**
**European Patent Office**
**Office européen des brevets**

(11) **EP 2 301 143 B1**

(12) **EUROPEAN PATENT SPECIFICATION**

(45) Date of publication and mention
of the grant of the patent:
**30.11.2011 Bulletin 2011/48**

(51) Int Cl.:
*H02P 9/00* (2006.01)     *H02P 9/10* (2006.01)
*H02P 9/30* (2006.01)

(21) Application number: **09762013.2**

(22) Date of filing: **11.06.2009**

(86) International application number:
**PCT/GB2009/050658**

(87) International publication number:
**WO 2009/150464 (17.12.2009 Gazette 2009/51)**

(54) **POWER GENERATORS**

STROMGENERATOREN

GÉNÉRATEUR D'ÉNERGIE

(84) Designated Contracting States:
**AT BE BG CH CY CZ DE DK EE ES FI FR GR HR HU IE IS IT LI LT LU LV MC MK MT NL NO PL PT RO SE SI SK TR**

(30) Priority: **13.06.2008 GB 0810867**
**13.06.2008 GB 0810865**

(43) Date of publication of application:
**30.03.2011 Bulletin 2011/13**

(73) Proprietor: **Wind Technologies Limited**
**Cambridgeshire CB4 0WS (GB)**

(72) Inventors:
• **MCMAHON, Richard, Anthony**
**Cambridgeshire CB5 9JG (GB)**
• **JALEBI, Ehsan, Abdi**
**Cambridgeshire CB3 0DS (GB)**

(74) Representative: **Martin, Philip John**
**Marks & Clerk LLP**
**62-68 Hills Road**
**Cambridge**
**CB2 1LA (GB)**

(56) References cited:
**EP-A- 1 804 372     WO-A-2004/040748**
**US-A- 5 929 612     US-A1- 2007 210 651**

**Description**

FIELD OF THE INVENTION

This invention relates to power generators, more particularly to brushless doubly-fed generators. The techniques we describe are particularly useful for generators in wind turbines, although applications are not limited to this field.

BACKGROUND TO THE INVENTION

The generation of electricity from the wind is a proven means of obtaining energy without the emission of carbon dioxide. Wind turbines range from large machines with peak outputs of several Megawatts to small machines designed for domestic use. For home use the maximum output power, at least in part limited by the acceptable size of blades, is 1 to 2 kW maximum, this maximum occurring at a wind speed of around 30 mph in most designs. Average output is rather less as wind speeds vary.

Background prior art is described in US5,929,612, which describes an induction generator for very high speed (gas turbine) operation. This is not a brushless doubly fed machine (BDFM) as it lacks the characteristics of such a machine (described later). Further background prior art is described in WO2004/040748, EP1804372A, and US2007/210651.

Some generators are intended for charging a battery and such systems find application, for example, in boats. There is no intention of feeding the power into the mains and the approach is one oriented to an isolated electrical system. However, there is growing interest in the use of small-scale turbines which supply power into the mains, to reduce the power drawn from the mains or even return power to the electricity supply company. An example of this is the 'Windsave' (RTM) product designed to supply power into the single-phase domestic mains. Tariff regimes are evolving which reward consumers for power supplied to the grid e.g. green energy.

A generator is an essential part of the wind turbine. For wind turbines of modest rating, up to say 2 kW, the normal choice is an ac machine with a permanent magnet rotor which has the advantage of robustness and compactness but several drawbacks, including cost. The output of the generator is variable voltage and variable frequency, both rising in proportion to the rotational speed of the blades and most generators will produce a three-phase output as these machines are more compact.

Whilst it is possible to construct wind turbines which run at constant speed, the harvesting of the available power is poor and in practice variable speed is used to achieve acceptable performance. However, the desired output is fixed frequency and voltage for injection into the mains and in many countries is single-phase output is required. Voltage and frequency conversion is possible using power electronics and two of many possibilities are an uncontrolled three-phase rectifier, or a controlled three-phase rectifier, followed by a single phase inverter; the use of a controlled rectifier will giving better performance. In addition, the electronic circuitry is to be designed with the peak output power in mind to avoid failures but this results in a poor utilization of the capacity of the electronics for most of the time. The result is a relatively expensive system with a long or even no payback time. Example of such systems are power conversion systems include (Windy Boy RTM).

There are additional issues associated with the supply of power to the mains. Current codes have a threshold of 2.5 kW - above this level more complex regulations apply. Nevertheless, even below 2.5 kW, there are strict regulatory requirements. One form of these, as found in the UK, is the G83 requirement which requires that in the event of mains failure the wind turbine must cease supplying power, the so-called anti-islanding requirement. In addition, most jurisdictions insist that any accessible parts should be galvanically isolated.

A somewhat different strategy in terms of generation is adopted in most large wind turbines. Variable speed operation is used to achieve satisfactory performance over the whole range of wind speeds. One possibility is to use large polyphase permanent magnet machines but these generate an output of variable frequency and voltage. The same issues then apply as found with small turbines, namely that the output has to be electronically converted to a fixed voltage and frequency. In particular, the need to convert large quantities of power is expensive.

Therefore, alternative approaches have evolved. The most commonly used employs a wound rotor induction machine with double feed. The stator of the machine is connected directly to the three-phase mains, and the stator winding is standard. The rotor of the machine is wound also with three-phase windings and connections are made to them by slip rings. An electronic power conversion circuit is used to link the rotor to the grid - the converter applies variable voltage and frequency to the rotor and can either supply power to the rotor or return power from the rotor to the grid. The machine operates in a synchronous mode with a fixed relationship between the grid frequency (i.e. the stator frequency), the rotor frequency and the shaft speed of the machine. The relationship is well documented in the literature. A further consideration is that the power flow in or out of the rotor, the power being inwards below the synchronous speed of the machine and out above the synchronous speed, increases in proportion to the deviation from synchronous speed. For example, if the induction generator is a 4-pole machine the synchronous speed is 1500 rpm. If the speed is increased to 1650 rpm, a 10% rise, the power output from the rotor is 10% of the power being supplied directly from the stator. In reality, this simple relationship is complicated by losses and the effect of the flow of reactive power (VArs) has to be taken in to account when sizing the converter and the machine windings. Nevertheless, the rating of the converter may be a modest fraction of the total power generated by the turbine.

The use of doubly fed wound rotor induction generators is attractive enough to make them the system of choice in most wind turbines. In large wind turbines, a gearbox is used to increase the shaft speed at the blades, say 50 rpm, typically to 100 to 1500 rpm to allow a 4 pole or 6 pole generator to be used. These are relative compact machines. However, the presence of brush gear is a major drawback as there is a maintenance issue, particularly acute offshore, and the brush gear is an expensive part of the machine, also increasing its size. Recently, brushless doubly fed machines (BDFMs) have been increasingly considered, as, as their name implies, they do not have brushes.

In these machines, there are stator windings, one of which is connected directly to the fixed frequency mains and the other is supplied with a variable frequency and voltage from a power converter which is bi-directional, as in the case for the doubly fed induction generator. Also these machines are run in a synchronous mode with a fixed relationship between the two stator frequencies and the shaft speed. Speed variation is achieved by changing the frequency applied to the second stator. The power rating of the converter supplying the variable frequency stator winding need only be a fraction of the desired power output of the machine, leading to substantial economic benefits.

A BDFM, in particular a single frame BDFM, has two stator windings of different pole numbers; alternatively a twin stator configuration can be used. The pole numbers are chosen so that there is no direct coupling between them, the rotor coupling with both stator fields. One of the stator windings, the power winding ($2p_1$ poles) is connected to the power grid with a fixed voltage and frequency and the other, the control winding ($2p_2$ poles) is supplied by a frequency converter with variable voltage and variable frequency. The frequency driving the control winding depends upon the rotor speed and is adjusted so that the frequency of the power winding output matches that of the grid, so achieving synchronous operation.

There are three principal types of brushless doubly-fed generators, namely the Brushless Doubly-Fed induction Generator (BDFG), the Brushless Doubly-Fed Reluctance Generator (BDFRG) (which has a reluctance type rotor), and the Brushless Doubly-Fed Twin Stator Induction Generator (BDFTSIG). Typically in a BDFG operation is via currents flowing in the rotor bars, which is not the case for a BDFRG (where the rotor has salient poles). In both the BDFG and BDFRG in general both stator windings are in a single frame, in general in the same slots, whereas a BDFTSIG has twin frames and two rotors on a common shaft. For a detailed classification and comparison of doubly-fed machines, reference can be made to: B.Hopfensperger and D.J.Atkinson, "Doubly-fed a.c. machines: classification and comparison," in Proc. 9th. European Conf. Power Electronics and Applications, August 2001 - and the specific definitions therein are hereby incorporated by reference. The techniques we describe later are applicable to all three types of BDFM, but they can be especially useful with the brushless doubly-fed induction generator (BDFG).

One of the inventors has published a number of papers relating to BDFM design, to which reference may be made for background information. These include:

P. C. Roberts, R. A. McMahon, P. J. Tavner, J. M. Maciejowski and T. J. Flack. Equivalent circuit for the Brushless Doubly-Fed Machine (BDFM) including parameter estimation. In Proc. IEE B - Elec. Power App., vol. 152, Issue 4, pp932-942, July 2005;

R. A. McMahon, P. C. Roberts, P. J. Tavner, and X. Wang. Performance of BDFM as a generator and motor Proc. IEE B - Elec. Power App., vol. 153, Issue 2, pp289-299, March 2006;

P. C. Roberts, T. J. Flack, J. M. Maciejowski, and R. A. McMahon. Two stabilising control strategies for the brushless doubly-fed machine (BDFM). In Int. Conf. Power Electronics, Machines and Drives, pages 341-346. IEE, April 2002;

E. Abdi-Jalebi, P. C. Roberts, and R. A. McMahon. Real-time rotor bar current measurement using a rogowski coil transmitted using wireless technology. In 18th Intl. Power Systems Conf. (PSC2003), Iran, volume 5, pages 1-9, October 2003;

P. C. Roberts, E. Abdi-Jalebi, R. A. McMahon, and T. J. Flack. Real-time rotor bar current measurements using bluetooth technology for a brushless doubly-fed machine (bdfm). In Int. Conf. Power Electronics, Machines and Drives, volume 1, pages 120-125. IEE, March 2004;

P. C. Roberts, R. A. McMahon, P. J. Tavner, J. M. Maciejowski, T. J. Flack, and X. Wang. Performance of Rotors for the Brushless Doubly-fed (induction) Machine (BDFM). In Proc. 16th Int. Conf. Electrical Machines (ICEM), 5th-8th September 2004, Cracow, Poland;

P. C. Roberts, J. M. Maciejowski, R. A. McMahon, T. J. Flack. A simple rotor current observer with an arbitrary rate of convergence for the Brushless Doubly-Fed (Induction) Machine (BDFM). In Proc. Proc. IEEE Joint CCA, ISIC, CACSD, September 2-4 2004, Taipai;

X. Wang, P. C. Roberts and R. A. McMahon. Studies of inverter ratings of BDFM adjustable drive or generator systems Proc. IEEE Conf. Power Electronics and Drive Systems (PEDS) 2005, Kuala Lumpur, Malaysia 28th Nov - 1st Dec 2005;

X. Wang, P. C. Roberts and R. A. McMahon. Optimisation of BDFM Stator Design Using an Equivalent Circuit Model and a Search Method Proc. Int. Conf. Power Electronics, Machines and Drives (PEMD), vol. 1, pp. 606-610, Clontarf Castle, Dublin, Ireland, 4th-6th April 2006;

R. A. McMahon, X. Wang, E. Abdi-Jalebi, P.J. Tavner, P. C. Roberts and M. Jagiela The BDFM as a Generator in Wind Turbines Int. Conf. Power Electronics and Motion Control Conference (EPE-PEMC), Portoroz, slovenia, 30th August - 1st September 2006;

P. J. Tavner, R. A. McMahon, P. C. Roberts, E. Abdi-Jalebi, X. Wang, M. Jagiela, T. Chick Rotor & Design Performance for a BDFM. In Proc. 17th Int. Conf. Electrical Machines (ICEM), 2nd-5th September 2006, Chania, Crete, Greece paper no. 439; and

D. Feng, P. Roberts, R. McMahon Control Study on Starting of BDFM. In Proc. 41st International Universities Power Engineering Conference (UPEC) 2006, 6th-8th September 2006, Northumbria University, Newcastle upon Tyne, UK.

Further background information relating to brushless doubly-fed generators other than the BDFG can be found in: WO 2005/046044; WO 01/91279; WO 00/48295; Seman S et al, "Performance Study of a Doubly Fed Wind-Power Induction Generator under Network Disturbances", published 2005, IEEE; Basic D et al, "Transient Performance Study of a Brushless Doubly Fed Twin Stator Induction Generator", published 2003, IEEE; and Duro Basic et al, "Modelling and Steady-State Performance Analysis of a Brushless Doubly Fed Twin Stator Induction Generator". Further background information can be found in, "A short review of models for grid-connected doubly-fed variable speed wind turbines, M. Hokkanen, H. J. Salminen, T. Vekara.

A field orientated control technique for a doubly-fed induction machine is described in WO03/026121. Further background prior art can be found in US5029288 and WO2008/150907; and in US2004/0052217, US2003/0052643, US2001/0006335, US6850033, WO2006/017306 and WO03/026121. The Oregon State University worked on aspects of BDFG design and operation in the 1980s and the inventors are aware of five patents which resulted from this work: US4994684, US5028804, US5083077, US5239251 and US5798631. However despite this work there remained problems in producing a design suitable for commercial applications.

There therefore exists a need for further development of brushless doubly-fed machines.

SUMMARY OF THE INVENTION

## 1. Power management

Broadly speaking we will describe a technique for deliberately dissipating power in the control stator winding of a BDFM by over-exciting this winding above the natural speed of the machine. This technique provides unexpected advantages.

Thus we describe a brushless doubly fed machine (BDFM) for coupling to an ac mains power supply line to deliver power to said ac mains power supply line, the machine comprising an ac mains power supply line connection, a brushless doubly fed generator, a controller coupled to said ac mains power supply line connection, and a sensor coupled to said controller, said brushless doubly fed generator having a rotor, said sensor being configured to sense rotation of said rotor, a power stator winding to provide an ac power supply from the machine to said ac mains power supply line connection and a control stator winding driven by said controller, wherein said controller is configured to provide a variable frequency drive to said control stator winding, wherein said brushless doubly fed generator has a natural speed of rotation of said rotor at which said frequency of said drive is zero, and wherein said controller is configured to draw power from said ac mains power supply line to drive said control stator winding when a speed of said rotor is below said natural speed of rotation and to dissipate power via said control stator winding when said speed of said rotor is above said natural speed of rotation such that when said speed of said rotor is above said natural speed of rotation said machine dissipates excess energy to thereby enable a substantially unidirectional power flow from said ac mains power supply line towards said control stator winding by reducing the efficiency of said machine above said natural speed of rotation.

Previously attempts to produce brushless doubly-fed machines for wind turbines have focused on maximising efficiency. By contrast the inventors have recognised that substantial improvements may be made by deliberately making the machine less efficient for gusts of wind - which are experienced relatively infrequently - instead optimising the design for closer to average conditions. As is well known to those skilled in the art (and is outlined later) a brushless doubly-fed generator has a natural speed of rotation of the rotor and the inventors have recognised that improvements can be made by deliberately wasting or dissipating energy when the rotor speed is greater than this natural speed of rotation, more particularly by increasing a drive to the controls stator winding. Therefore, instead of this control of winding generating power, as would otherwise be the case, a voltage supplied to inhibit this winding from generating power and, more particularly to force power into the control winding when the rotor speed is greater than its natural speed of rotation. In this way energy is drawn from the ac mains supply and is dissipated in the machine by the control and power windings. By increasing the voltage into the control winding to guarantee the current flows into this winding the drive circuitry for the control winding may be made unidirectional because substantially no power flows back from the control winding into the ac mains power supply. This in turn enables the drive circuitry to be simpler, cheaper to manufacture and more reliable and hence facilitates use of the machine in a commercially viable consumer product.

As the skilled person will understand, a brushless doubly-fed machine has a characteristic curve which relates speed of rotation of the rotor to voltage and frequency of the (three-phase) drive to the control winding. Thus in embodiments when the speed of rotation of the rotor is above its natural speed a voltage greater than defined by this characteristic curve is applied to the control winding, to thereby force current into the winding. The voltage applied may be defined by a lookup table relating speed of rotation (or equivalently, frequency) to the voltage to be applied. This information may be stored in memory or, for example, hard wired into an FPGA (field programmable gate array). In embodiments the applied voltage may be varied by varying a dc power supply voltage to an inverter driving the three-phase control winding. In some preferred embodiments the voltage applied to the control winding is limited to a maximum of fifty volts peak value which facilitates the use of inexpensive components, for example automotive grade MOSFETs.

The drive to the three-phase control winding may be a positive sequence drive or zero sequence currents may be employed, for example by adding a third, ninth or other triple harmonic component to the drive waveform for each of the windings.

To facilitate control of the machine preferably the sensor provides multiple pulses per revolution, for example at least 10 or 15 pulses per revolution; suitable sensors include an optical coder and a Hall sensor. In some preferred embodiments the frequency of the drive waveform for the control winding is adjusted by adjusting the phase of the waveform (stretching or compressing the sine wave data) using measured changes in the instantaneous speed of the rotor. This facilitates stability.

Increasing the volts per Hertz drive to the control winding at greater than the natural speed of rotation tends to increase the reactive power delivered by the generator. Thus preferred embodiments include a system to control or reduce this reactive power. This may comprise a circuit to sense the output phase angle and then to adjust the slope of the volts per Hertz controller, in particular to decrease the slope to export (reduce) reactive power. When the generator is delivering power at a lagging power factor (the grid looks inductive/resistive to the generator) - and when the control stator winding is over-excited - the generator looks like a capacitor. However in embodiments a capacitor may also be coupled across the output from the power stator winding, for example in the range 1-100μF, say 0-20μF, to help provide VARs when the machine is operating below natural speed.

A related method of operating a brushless doubly fed machine (BDFM) can be derived, said brushless doubly fed machine comprising a brushless doubly fed generator having a rotor, a power stator winding and a control stator winding, said rotor having a natural speed of rotation, the method comprising reducing an efficiency of said BDFM above said natural speed of rotation of said rotor by driving power into said control stator winding above said natural speed of rotation of said rotor to increase losses in said machine.

Preferably the control winding is driven with a voltage greater than that defined by the characteristic of the machine, to force current into the control winding when the machine is operating above its natural speed of rotation.

We also describe a brushless doubly fed machine (BDFM) for coupling to an ac mains power supply line to deliver power to said ac mains power supply live, the brushless doubly fed machine comprising an ac mains power supply line connection, a brushless doubly fed generator, a controller coupled to said ac mains power supply line connection, and a sensor coupled to said controller, said brushless doubly fed generator having a rotor, said sensor being configured to sense notation of said rotor, a power stator winding to provide an ac power supply from the machine to said ac mains power supply line connection and a control stator winding driven by said controller, wherein said controller is configured to provide a variable frequency drive to said control stator winding, wherein said sensor is configured to sense rotation of said rotor by a fraction of a revolution to provide multiple indications of said speed of rotation of said rotor per revolution of said rotor, and wherein said controller is configured to vary said frequency of said drive to said control stator winding by varying a phase of a waveform of said drive in response to a signal from said sensor indicating fractional rotation of said rotor.

In the above it is particularly preferable that the generator is a brushless doubly-fed induction generator (BDFG).

## 2. BDFM control

There is a further problem to address, which is that a BDFM is typically not open-loop stable under all conditions. In practice this can be observed as increasingly noisy operation followed by sudden loss of synchronisation. There is therefore also a need for improved control schemes for brushless doubly fed machines. According to the invention, as set forth in claim 1, there is therefore provided a brushless doubly fed machine (BDFM) for coupling to an ac mains power supply line to deliver power to said ac mains power supply line, the machine comprising an ac mains power supply line connection, a brushless doubly fed motor or generator, said brushless doubly fed motor or generator having a rotor, a power stator winding to provide an ac power supply from the machine to said ac mains power supply line connection, a controller coupled to said ac mains power supply line connection, a control stator winding driven by said controller, and sensor coupled to said controller, wherein said ac mains power supply comprises a three phase power supply, and characterised in that said sensor is configured to sense rotation of said rotor, and in that said controller comprises: a first input to receive a current signal and a voltage signal from said power stator winding; a second input to receive a current signal and a voltage signal from said control stator winding; a third input to receive a signal from said rotation sensor to provide angular position data and angular rotation speed data from said rotor; a first control module coupled to said third input and configured to generate a torque demand signal from said angular rotation speed data and information defining a target angular rotation speed of said rotor, and having a torque demand signal output; a torque estimation module coupled to said first and second inputs and configured to generate a torque estimation signal from said current and voltage signals from said power stator winding and said sensed current and voltage signals from said control stator winding, said torque estimation signal being dependent on a resistance torque being applied by said motor or generator, said torque estimator module having a torque estimation signal output; a second control module coupled to said torque demand signal output of said first control module and to said torque estimation signal output of said torque estimation module, and having a quadrature voltage control output to provide a quadrature voltage control signal;
a direct voltage control signal source having a direct voltage control output; a voltage reference frame conversion module coupled to said quadrature voltage control output, to said direct voltage control output, and to said third input, to convert a reference frame of said quadrature voltage control signal and said direct voltage control signal to output quadrature and direct voltage signals in a reference frame of said control stator winding, and having an output; and a control stator winding driver coupled to said control stator winding and to said output of said voltage reference frame conversion module to convert said quadrature and direct voltage signals in said reference frame of said control stator winding to a three phase voltage control signal for providing a three phase drive to said control stator winding in accordance with said three phase voltage signal.

Embodiments of the above-described controller are able to provide improved stability and/or greater operating efficiency. The first and second inputs may be separate or shared; a skilled person will understand there are many ways of determining or sensing voltages and currents on the power and control stator windings. In embodiments the rotation sensor may comprise a shaft encoder providing multiple pulses per revolution, for example an optical encoder or a Hall sensor. The skilled person will understand that from such a sensor it is possible to derive both angular position and angular rotation speed data.

In some preferred embodiments the voltage reference frame conversion module is configured to use the angular position data to convert the direct and quadrature voltage control signals from a reference frame of the power stator winding to a reference frame of the rotor and then from the reference frame of the rotor to the reference frame of the control stator winding.

In some preferred embodiments a further, power factor control loop is provided, the torque control loop controlling the quadrature axis voltage and the power factor control loop controlling the direct axis voltage component. The power factor control loop may either employ a fixed reference power factor or may have a power factor input; the latter is particularly useful in medium and large scale machines where controlling reactive power delivered to the grid is important. In embodiments the power factor/reactive power control loop responds to the sensed current and voltage on the power stator winding and controls the direct voltage axis component responsive to a comparison of the reactive power component on the power stator winding and a reference reactive power, which may be of fixed value or derived from a referenced power factor.

In some particularly preferred embodiments the reactive power comparison takes into account reactive power supplied by the line converter, that is by a converter supplying real power to and/or delivering real power from the control stator winding (depending upon the implementation and whether the rotor is low or above its natural speed of rotation). In still further embodiments one or more sets of capacitors, for example in a delta or star configuration, may be coupled across the power stator winding to provide further reactive power, and the power factor/reactive control loop may also take into account the effect of these capacitors (in embodiments the reactive due to the effect of the capacitors and/or from the line converter may be combined with the determined reactive power from the power stator winding and the combination used in the control loop to control to a reference reactive power/power factor).

We also describe a brushless doubly fed machine (BDFM) for coupling to an ac mains power supply line to deliver power to said ac mains power supply line, the machine comprising an ac mains power supply line connection, a brushless doubly fed motor or generator, and a controller coupled to said ac mains power supply line connection, said brushless doubly fed generator having a rotor, a power stator winding to provide an ac power supply from the machine to said ac mains power supply line connection and a control stator winding driven by said controller, said controller having a converter coupled to said ac mains power supply line, and wherein said controller is configured to control a power factor of said machine when coupled to said ac mains power supply line by controlling a component of reactive power supplied to said ac mains power supply line by said converter.

Preferably the controller includes a reactive power control module to implement a control loop as described above, responsive to a combination of reactive power contributions from the power stator winding and from the converter coupled to the control stator winding. (Optionally any reactive power contribution due to the capacitors which may be connected to parallel to the machine).

In embodiments the converter includes an inverter coupled between said ac mains power supply line and a dc link within the converter, and the reactive power supplied to the AC mains power supply line may be controlled by controlling one or both of the effective amplitude and phase of a set of three-phase pulse width modulation signals driving said inverter (effectively the amplitude and/or phase of signals defined by the PWM signals). The skilled person will appreciate that reactive power may be supplied to the AC mains irrespective of whether real power is being input from or output to the AC mains.

Particularly for medium to large scale machines it is desirable to be able to meet a desired target power factor for the grid, for example, say, 0.9. The need for this is greater as more power is delivered to the grid mains (and thus the control technique could even be power dependent, employing greater reactive power control at higher overall output powers). With embodiments of the technique described reactive power may be generated either using the power stator winding or using the (line) converter coupled to the control stator winding, or both. This relieves the burden from the power stator winding of delivering of all the reactive power. Further the ability to supply reactive power from the line converter provides a further degree of freedom which can be employed to reduce losses/increase efficiency of the machine, either at the design stage or during operation.

We further describe a method of controlling a power factor of a brushless doubly fed machine (BDFM) for coupling to an ac mains power supply line to deliver power to said ac mains power supply line, the machine comprising an ac mains power supply line connection, a brushless doubly fed motor or generator, and a controller coupled to said ac mains power supply line connection, said brushless doubly fed generator having a rotor, a power stator winding to provide an ac power supply from the machine to said ac mains power supply line connection and a control stator winding driven by a converter in said controller coupled to said ac mains power supply line, the method comprising controlling a component of reactive power supplied to said ac mains power supply line by controlling said converter coupled to said ac mains power supply line.

The invention also provides a controller for a brushless doubly fed machine, the controller being as described above in accordance with the invention and/or embodiments of the invention.

A brushless doubly fed machine as described above may be combined with a source of mechanical renewable energy such as a wind turbine, and in such an arrangement a target speed of rotation of the rotor may be derived from the renewable energy source, for example to maximise efficiency of the source. Preferred applications of the machine, include but are not limited to, combination with a wind turbine. In some preferred embodiments the generator is a brushless doubly-fed induction generator (BDFG).

BRIEF DESCRIPTION OF THE DRAWINGS

These and other aspects of the invention will now be further described, by way of example only, with reference to the accompanying figures in which:

Figures 1a to 1c show, respectively, a brushless doubly-fed machine according to an embodiment of the invention, a graph of control winding power input/output against rotor speed of rotation for the BDFM, and an overall general arrangement of a BDFM;

Figure 2 shows a more detailed schematic diagram of parts of the brushless doubly-fed machine of figure 1a with a unidirectional converter;

Figure 3 shows a second embodiment of a brushless doubly-fed machine according to the invention, employing a bi-directional converter.

Figure 4 shows an example of a controller for use with the BDFM of Figure 3;

Figure 5 shows a block diagram of a control system of the controller of Figure 4;

Figure 6 shows a block diagram of a reference frame conversion module for the controller of Figure 4;

Figure 7 shows a schematic block diagram of a system for reactive power control in a BDFM in which reactive power supplied by the line converter is employed to supplement the overall reactive power supplied to the grid, according to an embodiment of a second aspect of the invention;

Figure 8 shows a diagram of a brushless doubly-fed machine with a power stator winding directly connected to single-phase ac grid mains, a control stator winding driven from the ac mains supply via a frequency converter and with a brushless rotor;

Figure 9 shows a schematic block diagram of a brushless doubly-fed machine (BDFM) according to an embodiment of the invention;

Figure 10 shows a flow diagram of a procedure which, in embodiments, is implemented by the controller of figure 9; and

Figures 11a and 11b show, respectively, a graph of control winding power input/output against rotor speed of rotation for a BDFM, and an example of a voltage-frequency curve stored in the lookup table of the controller of figure 9 illustrating excess drive of the control winding to dissipate power which would otherwise be output from the control winding.

DETAILED DESCRIPTION OF PREFERRED EMBODIMENTS

**BDFM control**

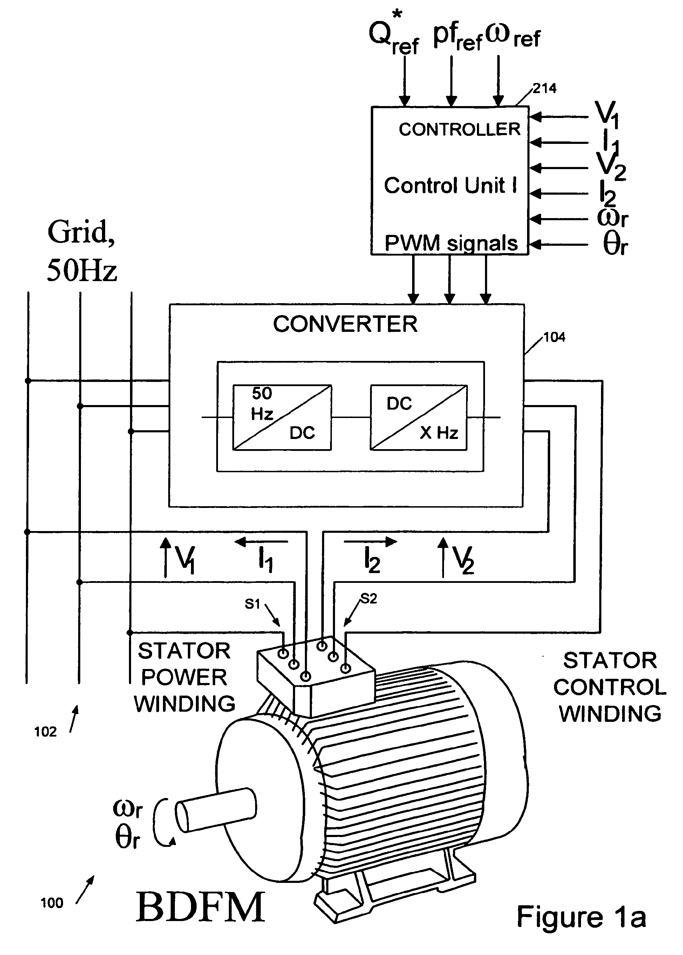

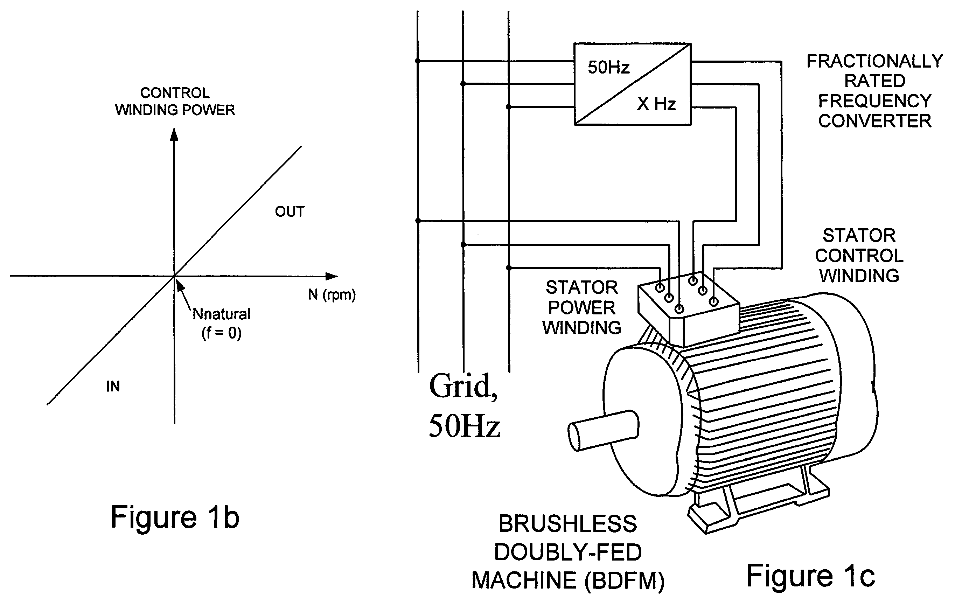

Figure 1a shows an outline block diagram of an embodiment of a brushless doubly fed machine (BDFM) 100 according to the invention. The BDFM has two stator windings, a power stator winding ($S_1$) which in embodiments is intended for direct connection to three-phase grid mains 102, and a control stator winding ($S_2$) which is connected to mains 102 via a (power) converter 104. We will describe embodiments with a 3-phase power stator winding and a 3-phase control stator winding; the converter may be unidirectional (from the mains to the control winding) or bi-directional. An example converter is shown inset, comprising a pair of series coupled AC-DC converters operating at a variable frequency on the machine side (to enable frequency control on this side) and at a fixed frequency on the line side (locked to the grid). The converter may, for example, comprise a 3-phase inverter on the machine side, such as a six switch inverter comprising three half-bridges, linked by a DC connection to a full bridge converter on the mains side; alternatively a switch mode configuration may be employed; a transformer may be employed for isolation, if required.

The BDFM has a rotor 106 which may be driven via a gearbox (not shown) by a wind turbine. The BDFM may be, for example, a 4-pole/8-pole machine with a natural speed of 500 rpm or a 2-pole/6-pole machine with a natural speed of 750 rpm.

In general (using the nomenclature above) the relationship between the speed of rotation of the rotor shaft in rpm (revolutions per minute), N and the inverter frequency x (that is, the frequency of the drive to the control winding) is given by:

$$N = \frac{60.(50+x)}{p_1 + p_2} \qquad (1)$$

where $p_1$ and $p_2$ are the numbers of pole pairs on the power & control windings respectively, the factor of 60 converts from revolutions per second to revolutions per minute and the constant 50 refers to the frequency of the mains supply (and can therefore be adjusted according to the particular country in which the machine is operating). At the natural speed of rotation, $N_{nat}$, $x = 0$ and thus

$$N_{nat} = \frac{60 \cdot (50 + 0)}{p_1 + p_2} \qquad (2)$$

The BDFM has the characteristic that the flow of power in the control winding is related to the deviation from the natural speed, and in an ideal BDFM the power in the control winding is proportional to the power in the power winding times the change in speed from the natural speed divided by the natural speed, i.e. the fractional deviation in speed. In generating mode, power flows into the control winding below natural speed and out of the control winding above natural speed.

This is illustrated in figure 1b which shows an ideal power input/output of the control winding on the vertical axis against rotor speed (in rpm) on the horizontal axis. It can be seen that above the natural speed of rotation the control winding generates power.

In reality there are resistive losses and other losses in a BDFM and the effect is to make the machine more efficient above its natural speed. In addition, there are reactive powers in the system. Both magnetic fields require magnetizing current which is associated with reactive power, and there are VArs associated with the leakage reactances in the machine. Furthermore, changing the excitation on the control winding will change the flow of VArs through the machine in that increasing the control winding excitation will tend to lead to the generation of VArs on the power winding and the reduction of excitation will lead to the absorption of VArs.

Experience shows that there is a 'balanced' excitation which gives minimum current for a given amount of load torque and hence electrical power output. This is a preferable condition for achieving minimum resistive losses but the power factor of the power winding may not be acceptable. In this case there will be trade-off between losses and power factor. The need to handle reactive power also affects the ratings of the control windings. Put simply, the greater the reactive power to be processed the lower the real power output of a given sized machine will be.

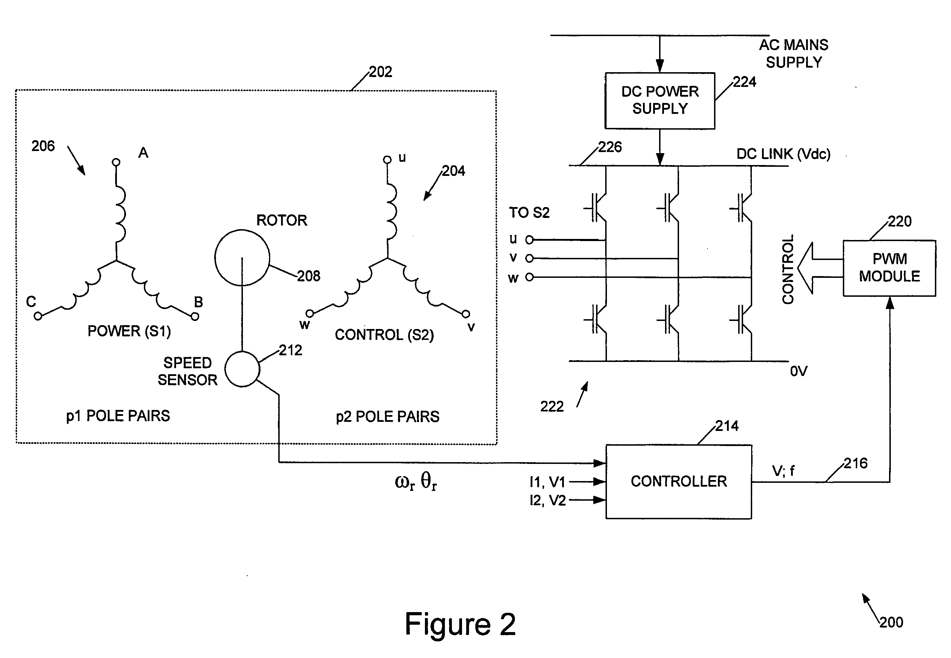

Referring now to figure 2, this shows a more detailed schematic diagram of a brushless doubly-fed machine 200 with a unidirectional converter. The machine comprises a brushless doubly-fed induction generator 202 which has a three-phase control stator winding 204, and a three-phase power stator winding 206 coupled by a rotor 208. The control winding 204 has three terminals, u, v, w (and $p_2$ pole pairs); the power winding 206 has three terminals A, B, C (and $p_1$ pole pairs) for connection to a three-phase mains supply.

A sensor 212 is coupled to rotor 208 to sense rotation of the rotor and hence its speed of rotation. Sensor 212 may comprise, for example, an optical or Hall effect sensor, preferably providing at least 16 pulses per revolution to facilitate small phase angle adjustments. This provides an input to controller 214. Further inputs to the controller are provided by a sensed current and voltage ($I_1$, $V_1$) of one of the three phases of the power stator winding and a sensed current and voltage ($I_2$, $V_2$) of one of the three phases of the control stator winding (in each case only one phased need to be sensed, assuming the three phases are balanced). The skilled person will be aware of many techniques which may be employed for the sensing of $I_1$, $I_2$, $V_1$, and $V_2$. The controller 214, responsive to the determined instantaneous position & speed of rotation of the rotor, and $I_1$, $I_2$, $V_1$ and $V_2$, provides a control signal output for controlling the voltage and frequency of three-phase sinusoidal waveforms applied to terminals u, v and w of control windings 204.

In the illustrated embodiment the control signals 216 are provided to a pulse width modulation module 220 which provides a set of three-phase sinusoidal waveforms for driving inverter 222 (via level shift circuitry, not shown in figure 2) and thence control winding terminals u, v, w. The PWM sinusoidal waveforms may, for example, represent the instantaneous amplitude of a sinusoidal waveform by an "on" pulse width. By varying the widths of the PWM pulses whilst maintaining their "sinusoidal distribution" the overall amptitude of the sinusoidal waveform may be varied (shorter pulses giving a lower on "average" PWM voltage). Thus both voltage and frequency can be controlled.

The inverter module 222 receives dc power from a dc power supply 224, in turn powered by the ac mains supply to which the power winding is connected. It will be appreciated that the voltage of the three-phase waveforms driving the control winding may be varied either by varying the amplitude of the sinusoidal waveforms using the PWM controller 220 and/or by controlling the voltage on dc link line 226. Thus in embodiments there may be a voltage control connection from controller 214 to dc power supply 224 to enable the controller to control the dc link voltage and therefore the voltage applied to the control winding.

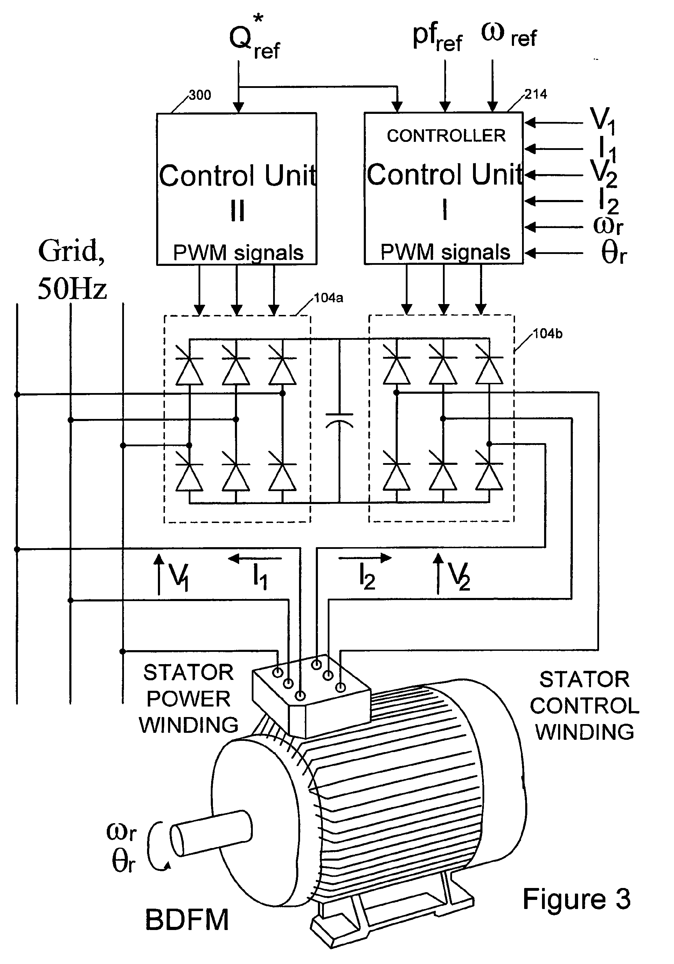

As the skilled person will be aware, a range of different circuits may be employed for the PWM module 220, inverter 222, and dc power supply 224. The controller 214 (described in more detail below) may be implemented using a field programmable gate array (FPGA) or microcontroller. Figure 3 shows a second embodiment of a brushless doubly-fed machine according to the invention, employing a bi-directional converter.

The converter 104 comprises a pair of AC-DC converters, 104a,b, in the illustrated example each comprising a three-phase 6-switch inverter with three half-bridges; these are coupled by a DC link. The switches may be thyristors, as illustrated, or preferably IGBTs. A second control unit 300 provides PWM signals to control inverter 104a which provides power to the grid mains; this has an input ($Q_{ref}$*) used to control the reactive power supplied to the grid, for example by controlling the phase shift of the PWM signals relative to the three phase mains voltage.

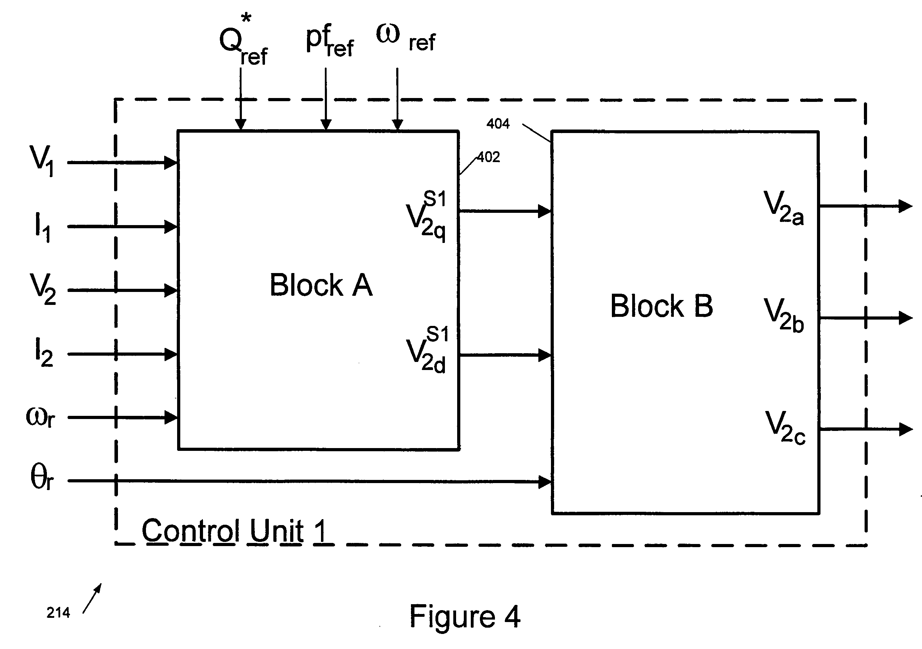

Referring now to Figure 4, this shows details of the controller (Control Unit I) 214 of Figure 3. The controller has two main modules, a first, control module 402 (Block A) and a second, reference frame conversion module 404 (Block B). In embodiments to the control module 402 receives current and voltage sense inputs from each of the power and control stator windings as well as data indicating the angular rotation speed of the rotor ($\omega_r$). Control module 402 also receives a target angular speed input ($\omega_{ref}$), and optionally a target power factor input ($pf_{ref}$), and further optionally a signal ($Q^*_{ref}$) indicating the reactive power supplied by the control unit 300 to the grid mains, optionally taking into account any further reactive power supplied by capacitors connected across the machine. The Control Module 402 provides direct and quadrature voltage outputs $V^{s1}_{2q}$ and $V^{s1}_{2d}$ (where $S_1$ denotes the Stator 1 flux reference frame), which together define a set of three phase voltages $V_{2a}$, $V_{2b}$, $V_{2c}$ to be applied to the control stator winding. The reference frame conversion 404 receives the direct quadrature voltage signals from the control module 402, and also an angular position measurement signal for the rotor, which it uses to convert the quadrature and direct voltage signals to three phase voltages.

It is helpful at this point to explain a little further about direct and quadrature voltages: because of redundancy in a three phase representation, two sets of voltages can be employed to represent the desired three phases. A conversion from the three phases to direct and quadrature voltages is known as a Park-Clark transformation; a conversion from direct and quadrature to three phase voltages performed by an inverse of that transformation, and this requires angular position information. In a d-q, model the quadrature component is related to the magnetic flux and hence is proportional to the torque, in effect the resisting or breaking torque being applied by the generator. (This can be understood by considering the effect on the torque of increasing or decreasing the magnetic field). The direct voltage component controls the power factor.

In the controller at Figure 4 the direct and quadrature voltages are in the reference frame of the power stator winding ($S_1$) flux and thus a transformation is applied to convert to the reference frame of the control stator winding. This is explained in more detail below.

To illustrate this, consider the example of a 4-pole, 8-pole machine with a 25 Hz current in to the rotor bars. The 4-pole field produced by the rotor rotates at 750 rpm relative to the rotor and the 8-pole field performed by the rota rotates at 375 rpm relative to the rotor (in the opposite direction). When the machine is in synchronisation the 4-pole field synchronises with one stator winding, for example the power winding and the 8-pole synchronises with the other winding, for example the control stator winding. Thus if, say, the rotor is rotating at 750 rpm then the 4-pole field rotates at 1500 rpm and synchronises with the power stator winding and the 8-pole field rotates at 375 rpm and synchronises with the control stator winding. Therefore the 4-pole stator winding frequency is 50Hz and the 8-pole stator winding frequency is 25Hz.

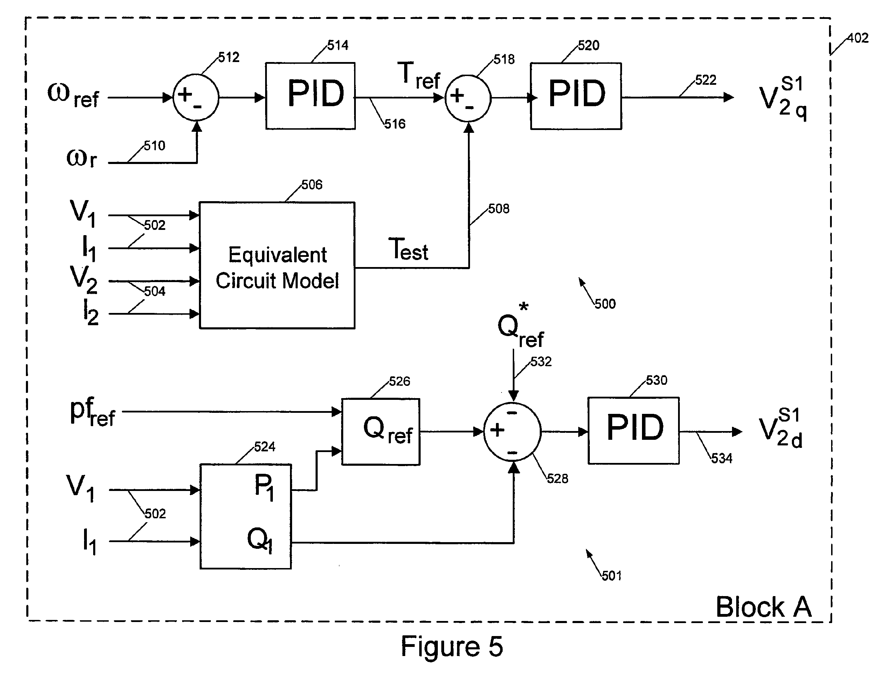

Referring now to Figure 5, this shows details of the Control Module 402 on Figure 4. The Control Module 402 has first and second inputs, 502, 504 to receive voltage and current sense signals from the power and control stator windings respectively, and these provide the inputs to an equivalent circuit model 506 for the generator, which has an output 508 comprising a signal $T_{est}$ estimating the torque in the generator. For an example and a detailed description of a suitable equivalent circuit model reference may be made to P.C. Roberts, R.A. McMahon, P.J. Tavner, J.M. Maciejjowski, and T. J. flack; "Equivalent circuit for the brushless doubly fed machine (BDFM) including parameter estimation and experimental verification", Electrical Power Applications, IEE Proceedings, 152(40):933-942, July 2005. Alternatively but less preferably, a torque transducer may be employed to sense the torque at the shaft of the generator.

The Control Module 402 also has a third input 510 from an angular position/speed sensor to provide measured angular rotation date ($\omega_r$). The module may also receive a reference or target angular rotation input ($\omega_{ref}$) and a differencer 512 determines the difference between the measured and target rotation speeds. This information is provided to a first PID (proportional integral derivative) Control Unit 514, which provides an output 516 bearing a signal which defines a target or a reference torque ($T_{ref}$) for the generator. The estimated or measured torque and the target or reference torque are differenced in differencer 518 and provided to a further PID Control Unit 520 which provides a quadrature voltage output 522 for the control stator winding, to apply a torque to bring the rotor speed towards the target angular rotation speed.

The skilled person will understand that the PID units described above (and below) may be replaced by other control mechanisms, of which many types are available. For example the derivative term may be omitted; in other embodiments fuzzy logic control may be employed.

The above described components of the Control Module 402 provide a rotor speed control system 500. Optionally a power factor or reactive power control system 501 may also be included in Control Module 402. In embodiments the power factor control system is coupled to the first input 502 to receive current and voltage sense signals from the power stator winding and these are input to a module 524 which calculates real power $P_1$ and reactive power $Q_1$ of the power stator winding. These may be determined as shown by the equations below (where $\varphi$ is the phase angle between the voltage and current, assuming balanced three phase sets):

$$P_1 = |V_1| \, |I_1| \cos \phi$$

$$Q_1 = |V_1| \, |I_1| \sin \phi$$

$$pf_1 = \cos \phi$$

Optionally power factor control system 501 also has a target power factor input ($pf_{ref}$), and this together with $P_1$ is used by module 526 to determine a target reactive power $Q_{ref}$. For example using the following equation:

$$Q_{ref} = P_1 \tan (\cos^{-1} pf_{ref})$$

A differencer is used to compare the reactive power from the power stator winding with the target reactive power $Q_{ref}$ and this provides a signal to a further PID unit 530, which in turn provides a direct axis voltage output $V_{2d}{}^{s1}$, this defining the control stator winding voltage for the desired reactive power.

Optionally as illustrated in Figure 5, differencer 528 may have a further input 532 ($Q^*_{ref}$) which defines a reactive power contribution supplied by a converter 104 to the grid, optionally also including any reactive power supplied by capacitors connected across the output of the machine. This reactive power component may be subtracted from the target reactive power, together with the reactive power supplied from the power stator winding in a machine in which the converter is employed to supplement the overall reactive power supplied to the grid mains. This is described in more detail later.

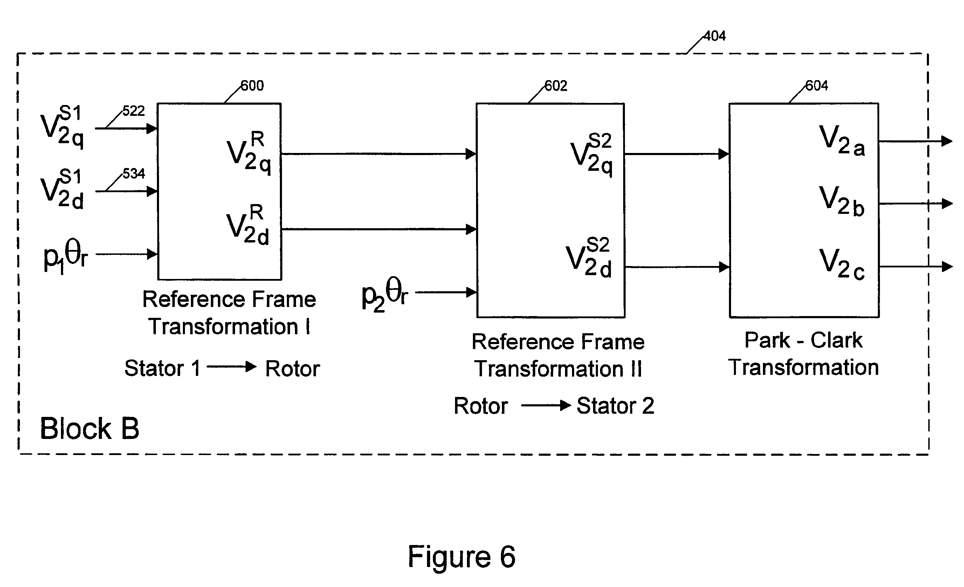

Referring now to Figure 6, this contains details of the reference frame conversion module 404 of the controller at Figure 4. The converter module 404 receives quadrature 522 and direct 534 voltage inputs from Control Module 402, and also sensed angular position data ($\theta_r$) for the rotor. As illustrated, when used in the reference frame transformation the rotor position is multiplied by the number of pole pairs of the power and control stator windings. The reference frame conversion is implemented by two reference frame transformation units 600, 602, a first to transform from the reference frame of the power stator winding flux to the reference frame of the rotor (still using the d-q representation), and a second to transform from the reference frame of the rotor to the reference frame of the control stator winding flux. A Park-Clark transformation unit 604 is then employed to convert the d-q representation to a three-phase voltage representation $V_{2a}$, $V_{2b}$, $V_{2c}$ which is used to control PWM signals applied to converter 104 to drive the control stator winding.

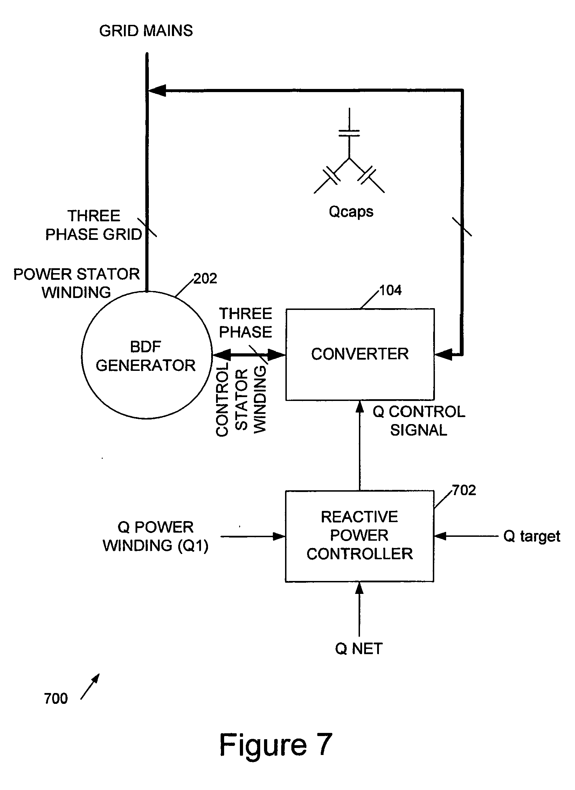

Referring now to Figure 7, this shows a simplified block diagram of an embodiment of a brushless doubly-fed machine 700 in which the converter is used to supply reactive power to the grid mains. In Figure 7 like elements to those previously described are indicated by like reference numerals. Using the converter 104 to supply reactive power eases the requirement on reactive power on the power stator winding and helps efficiency.

The converter 104 at Figure 7 is a bi-directional converter with a real power, $P_3$ which varies with speed of rotation as illustrated in Figure 1b. We use Q3 to represent the reactive power component of the converter, and cos $\phi_3$ to represent the power factor of the converter. We can then define a net reactive power and net real power according to the equations below:

$$Q_{net} = Q_1 + Q_3 + \text{optional } Q_{caps}$$

$$P_{net} = P_1 + P_3$$

where $Q_{caps}$ comprises reactive power supplied by capacitors connected across the machine, as schematically illustrated. A controller 702 may then be employed to control the reactive power supplied by the converter using the net reactive power $Q_{net}$, $Q_1$ and a target reactive power, $Q_{target}$. The reactive power controller 702 provides a reactive power control signal to converter 104 to control the reactive power delivered to the grid mains.

Referring again to Figure 3, if the grid voltage is $V_1$ and the (three phase) voltage defined by the PWM signal from Control Unit II 300 is $V_2$, the effective reactance between inverter 104a and the grid is X (optionally this may be increased with the addition of series inductance), and the phase angle between $V_1$ and $V_2$ is $\delta$, then the real power supplied from or delivered to the grid is given by, per phase:

$$P = \frac{V_1 V_2 \sin \delta}{x}$$

The reactive power, per phase, is:

$$Q = \frac{V_1(V_1 - V_2 \cos \delta)}{x}$$

$$= Q_{ref}^{\bullet} \qquad (t \arg et)$$

No doubt many other effective alternatives will occur to the skilled person. For example corresponding techniques could be used to control speed and/or torque and/or reactive power supply of a BDFM configured as a motor.

**Power management**

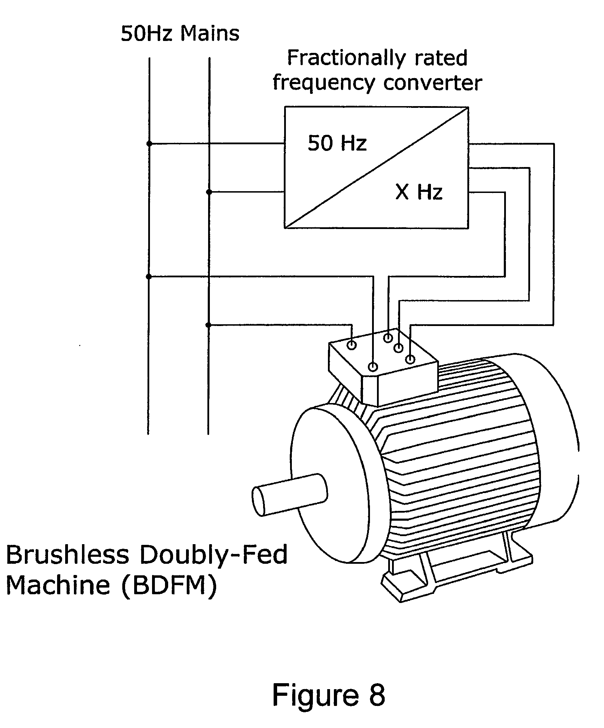

We will now describe the application of a BDFM, in this case comprising brushless doubly fed induction generator (BDFG), to small-scale wind generation. Referring to Figure 8, this shows the overall arrangement of a BDFM (here a BDFG): one of the two windings of the BDFG, the power winding, as it is intended for direct connection to the mains, is reconfigured as a single phase winding as the majority of domestic installations are single phase. The control winding is fed from a small three-phase inverter. The rotor of the BDFG may be driven, via a gearbox (not shown) by a wind turbine.

In more detail, the BDFM has a single phase power winding connected directly to the mains, and this winding will be designed for the prevailing mains supply, for example 230 V, 50 Hz. The three-phase control winding is supplied by an inverter which can be a conventional six switch inverter comprising three half-bridges. The control winding can be wound for any convenient voltage and it is advantageous to use a voltage that can be derived from system using no more than a maximum of 50 V to simplify compliance with regulations. Note that there is electrical isolation between the power winding and the control winding and this insulation can be made good enough to ensure compliance with regulations. One possible means of achieving this is to apply a layer of insulation in the slots between windings.

The BDFM may be for example a 4-pole/8 pole machine with a natural speed of 500 rpm. For small turbines the maximum shaft speeds lie in the range 500 to 750 rpm so the BDFM is well matched to this range. Another alternative BDFM could be a 2pole/6pole machine with a natural speed of 750 rpm.

In general (using the nomenclature above) the relationship between the speed of rotation of the rotor shaft in rpm (revolutions per minute), N and the inverter frequency x (that is, the frequency of the drive to the control winding) is given by:

$$N = \frac{60.(50 + x)}{p_1 + p_2} \qquad\qquad (1)$$

Where $p_1$ and $p_2$ are the numbers of pole pairs on the power and control windings respectively, the factor of 60 converts from revolutions per second to revolutions per minute and the constant 50 refers to the frequency of the mains supply (and can therefore be adjusted according to the particular country in which the machine is operating). At the natural speed of rotation, $N_{nat}$, $x = 0$ and thus

$$N_{nat} = \frac{60.(50+0)}{p_1 + p_2} \qquad (2)$$

The BDFM has the characteristic that the flow of power in the control winding is related to the deviation from the natural speed, and in an ideal BDFM the power in the control winding is proportional to the power in the power winding times the change in speed from the natural speed divided by the natural speed, i.e. the fractional deviation in speed. In generating mode, power flows into the control winding below natural speed and into the control winding above natural speed.

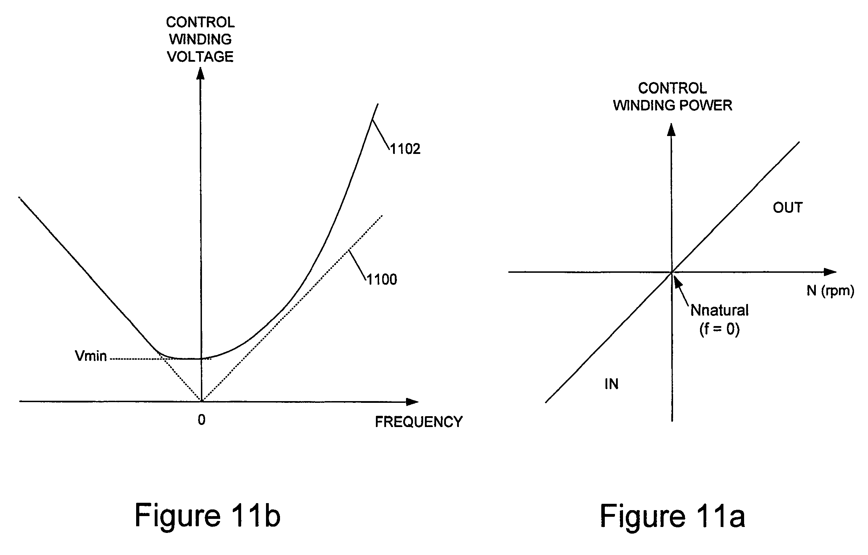

This is illustrated in Figure 11a which shows an ideal power input/output of the control winding on the vertical axis against rotor speed (in rpm) on the horizontal axis. It can be seen that above the natural speed of rotation the control winding generates power.

In reality there are resistive losses and other losses in a BDFM and the effect is to make the machine more efficient above its natural speed. In addition, there are reactive powers in the system. Both magnetic fields require magnetizing current which is associated with reactive power, and there are VArs associated with the leakage reactances in the machine. Furthermore, changing the excitation on the control winding will change the flow of VArs through the machine in that increasing the control winding excitation will tend to lead to the generation of VArs on the power winding and the reduction of excitation will lead to the absorption of VArs.

Experience shows that there is a 'balanced' excitation which gives minimum current for a given amount of load torque and hence electrical power output. This is a preferable condition for achieving minimum resistive losses but the power factor of the power winding may not be acceptable. In this case there will be trade-off between losses and power factor.

The need to handle reactive power also affects the ratings of the control windings. Put simply, the greater the reactive power to be processed the lower the real power output of a given sized machine will be.

The fact that power flow in the control winding is bi-directional implies that the electronic converter associated with the control winding is bi-directional. This can be envisaged as a conventional three-phase inverter on the machine side linked by a dc connection to a full bridge converter on the mains side. However, this arrangement is complex and there also problems associated with returning this power to the mains. In addition, this arrangement does not offer galvanic isolation which may be required for safety reasons. A transformer can be used for isolation but a mains frequency transformer is a large and expensive component. Alternatively a switch mode configuration can be used, but this leads to further circuit complexity.

We therefore use an arrangement which avoids the need for a bi-directional converter. The converter is unidirectional in that power is drawn from the mains and no power is returned to the mains. When the BDFM goes below its natural speed, i.e. when the turbine is turning slowly, the driving torque and hence power falls (turbine torque is proportional to wind speed cubed). Therefore the power flow from the power winding falls and even if the fractional speed deviation reaches say 50% the actual power required by the control winding will only be one eight of the nominal rating of the power winding. This power can easily be supplied by a low voltage inverter with a dc supply from an inexpensive consumer type computer power supply.

When the turbine and hence the BDFM goes above natural speed, the power output from the control winding becomes positive but by increasing the excitation increased losses will occur which will absorb this extra power. As a side effect the power winding power factor will move from lagging towards leading.

Although this strategy may seem wasteful, it provides an economical means of dealing with relatively infrequent strong gusts, allowing the machine to optimized for the more commonly occurring lower wind speeds. This approach leads overall to good exploitation of the available wind resource.

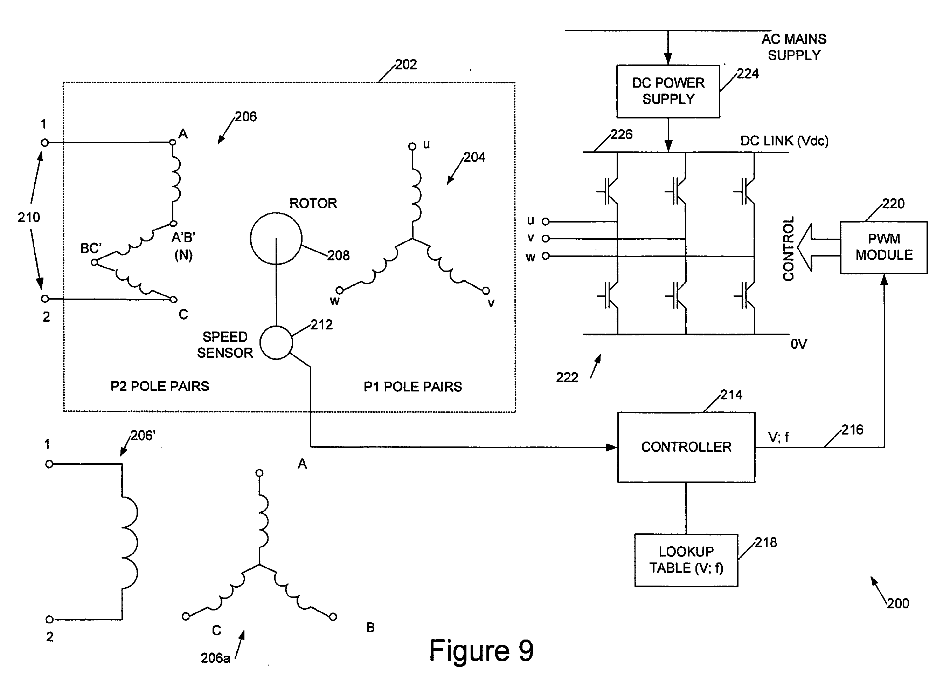

We refer now to Figure 9, in which like elements to those of Figure 2 are indicated by like reference numerals. Thus this figure shows a schematic diagram of a brushless doubly-fed machine 200 according to an embodiment of the invention. The machine comprises a brushless doubly-fed induction generator 202 which has a three-phase control stator winding 204, and a three-phase power stator winding 206 coupled by a rotor 208. The control winding 204 has three terminals, u, v, w and $p_2$ pole pairs; the power winding 206 has three terminals A, B, C and $p_1$ pole pairs. As illustrated the three terminals of the power winding are connected to provide a single phase output 210 for direct connection to ac grid mains (the arrangement shown is equivalent to the illustrated single phase winding 206'). In some countries, for example Germany, a three-phase mains supply is employed in which case an alternative configuration 206a of the power winding may be used.

A sensor 212 is coupled to rotor 208 to sense rotation of the rotor and hence its speed of rotation. Sensor 212 may comprise, for example, an optical or Haul effect sensor, preferably providing at least 16 pulses per revolution to facilitate small phase angle adjustments. This provides an input to controller 214 which, responsive to the determined instantaneous speed of rotation of the rotor, provides a control signal output for controlling the voltage and frequency of three-phase sinusoidal waveforms applied to terminals u, v and w of control windings 204. In embodiments the controller 214 is coupled to a lookup table 218 which stores values of voltage, and optionally frequency, for use by controller 214 as described in more detail below.

In the illustrated embodiment the control signals 216 are provided to a pulse width modulation module 220 which provides a set of three-phase sinusoidal waveforms for driving inverter 222 (via level shift circuitry, not shown in figure 9) and thence control winding terminals u, v, w. The PWM sinusoidal waveforms may, for example, represent the instantaneous amplitude of a sinusoidal waveform by an "on" pulse width. By varying the widths of the PWM pulses whilst maintaining their "sinusoidal distribution" the overall amplitude of the sinusoidal waveform may be varied (shorter pulses giving a lower "average" PWM voltage). Thus both voltage and frequency can be controlled. Preferably the switching frequency is chosen to be above human audible range, for example greater than 18KHz.

The inverter module 222 receives dc power from a dc power supply 224, in turn powered by the ac mains supply to which the power winding is connected. The dc output voltage from this power supply on the dc Link line is preferably less than 50 volts, for example 48 volts. It will be appreciated that the voltage of the three-phase waveforms driving the control winding may be varied either by varying the amplitude of the sinusoidal waveforms using the PWM controller 220 and/or by controlling the voltage on dc link line 226. Thus in embodiments there may be a voltage control connection from controller 214 to dc power supply 224 to enable the controller to control the dc link voltage and therefore the voltage applied to the control winding. In embodiments the PWM controller 220 may be configured to apply zero sequence currents to control winding 204, for example by adding some third harmonic to the waveforms driving the control winding.

As the skilled person will be aware, a range of different circuits may be employed for the PWM module 220, inverter 222, and dc power supply 224. The controller 214 and lookup table 218 may be implemented using a field programmable gate array (FPGA) or microcontroller.

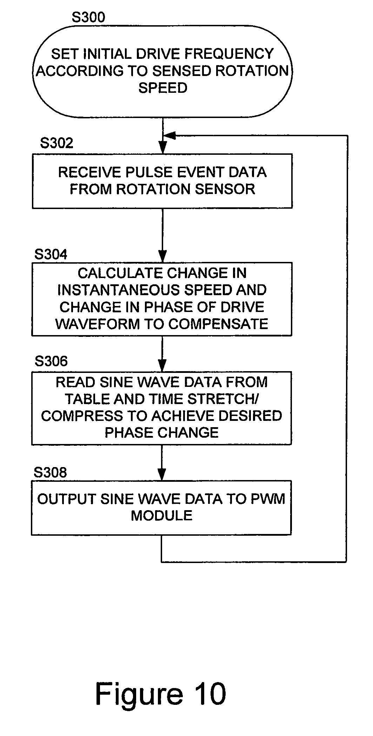

Referring now to figure 10, this shows a flow diagram of a procedure which may be implemented by controller 214 either in software or in hardware or in a combination of the two to control the frequency of the drive waveforms applied to control winding 204. In a simple embodiment the frequency of the control winding drive may be determined using equation (one) above where $N$ is the sensed speed of rotation and x is the calculated frequency of the PWM drive. However, because a difference between the mechanical phase angle and magnetic phase angle can vary depending upon the load it is preferable to use a control loop which controls the phase of the applied waveform (and therefore, indirectly, its frequency) based upon the measured phase of the rotor. Thus in the procedure of figure 10, at step S300 an initial drive frequency is set based upon the sensed speed of rotation but there after a phase control loop (steps S302-S308) is employed.

Thus at step 5302 the procedure receives a signal from the rotation sensor indicating that a pulse has been detected and that the rotor shaft has therefore turned through a fraction, for example 1 over 16, of a full revolution. The instantaneous speed may be calculated based upon the time interval between successive pulses or in some more complex manner for example employing a moving average. At step S304 the procedure determines a change in the instantaneous speed of the rotor and then changes the phase of the drive waveform to compensate. Thus at step S306 the procedure reads fine wave data from a table and either time extends of time compresses this data to achieve a desired phase change, for example a phase change which over a complete revolution will provide a frequency change satisfying equation (one). If there is less than a threshold change in instantaneous speed there may be no time stretch/compress applied to the drive waveform. Then at step S308 the sign wave data is provided to the PWM module which generates three waveforms 120° out of phase with one another to provide the three-phase drive or the control winding 204. The procedure then loops back to step S302.

Referring now to Figure 11b, this shows a graph of control winding drive voltage against control winding drive frequency implemented by controller 214 using lookup table 218. The zero frequency point on the x-axis corresponds to the natural speed of rotation of rotor 208. Frequencies to the left of this on the graph ("negative") relate to a situation where the speed of rotation of rotor 208 is below its natural speed of rotation; frequencies to the right of this point ("positive") relate to a speed of rotation greater than the natural speed of rotation.

As can be seen, below the natural speed of rotation of the rotor there is a generally linear relationship between the frequency of the drive and the voltage applied to the drive; the slope of this (in volts per Hertz) is characteristic of a particular machine although there is a limit to the maximum volts per Hertz set by saturation of iron within the machine and the like. There is a minimum voltage $V_{min}$ which is applied to the control winding at zero drive frequency (and therefore the curved parts from familiarity at this point). This is the voltage required for rated current flow through the control winding at dc; an example value might be 2.5 volts for a 0.5 $\Omega$ winding with a 5 amp desired current. The slope of the curve is typically of order of magnitude 1 volt per Hertz.

Dashed line 1100 shows a linear voltage - frequency relationship above the natural speed of rotation of the rotor, corresponding to power generation by the control winding as shown in Figure 11a. However, in embodiments of the machine we describe the voltage - frequency curve 1102 is arranged so that at drive frequencies greater than zero, that is rotor speeds above the natural speed of rotation, the voltage applied to the control winding is increased above that which would be defined by a linear voltage - frequency relationship, to thereby enable current to be forced into the control winding even at speeds above the natural speed of rotation of the rotor. This draws energy from the ac mains supply and dissipates it in the windings of the machine, effectively wasting energy. However the machine only briefly operates in this regime, during gusts of wind and therefore this waste of energy can be tolerated since it enables the inverter 222 (and power supply 224) to be unidirectional.

Thus an arrangement of this type is able to employ simpler, cheaper and more reliable electronic circuitry, which in turn has a substantial impact on the economic viability of wind powered electricity generation.

No doubt many other effective alternatives will occur to the skilled person. It will be understood that the invention is not limited to the described embodiments and encompasses modifications apparent to those skilled in the art lying within the scope of the claims appended hereto.

**Claims**

1. A brushless doubly fed machine (BDFM) (100) for coupling to an ac mains power supply line to deliver power to said ac mains power supply line (102), the machine comprising an ac mains power supply line connection, a brushless doubly fed motor or generator, said brushless doubly fed motor or generator having a rotor (208), a power stator winding (S1) to provide an ac power supply from the machine to said ac mains power supply line connection, a controller (214) coupled to said ac mains power supply line connection, a control stator winding (S2) driven by said controller, and sensor (212) coupled to said controller, wherein said ac mains power supply comprises a three phase power supply, and

   **characterised in that** said sensor is configured to sense rotation of said rotor, and **in that** said controller comprises:

   a first input to receive a current signal ($I_1$) and a voltage signal ($V_1$) from said power stator winding;
   a second input to receive a current signal ($I_2$) and a voltage signal ($V_2$) from said control stator winding;
   a third input to receive a signal from said rotation sensor to provide angular position data for ($\theta r$) and angular rotation speed ($\omega r$) data from said rotor;
   a first control module (214; 500) coupled to said third input and configured to generate a torque demand signal (Tref) from said angular rotation speed data and information defining a target angular rotation speed of said rotor, and having a torque demand signal output;
   a torque estimation module (506) coupled to said first and second inputs and configured to generate a torque estimation signal (Test) from said current and voltage signals from said power stator winding and said sensed current and voltage signals from said control stator winding, said torque estimation signal being dependent on a resistance torque being applied by said motor or generator, said torque estimator module having a torque estimation signal output;
   a second control module (520) coupled to said torque demand signal output of said first control module and to said torque estimation signal output of said torque estimation module, and having a quadrature voltage control output (522) to provide a quadrature voltage control signal;
   a direct voltage control signal source (501) having a direct voltage control output;
   a voltage reference frame conversion module (404) coupled to said quadrature voltage control output, to said direct voltage control output, and to said third input, to convert a reference frame of said quadrature voltage control signal and said direct voltage control signal to output quadrature and direct voltage signals in a reference frame of said control stator winding, and having an output; and
   a control stator winding driver (214;104b) coupled to said control stator winding and to said output of said voltage reference frame conversion module to convert said quadrature and direct voltage signals in said reference frame of said control stator winding to a three phase voltage control signal for providing a three phase drive to said control stator winding in accordance with said three phase voltage signal.

2. A brushless doubly fed machine (BDFM) as claimed in claim 1 wherein said voltage reference frame conversion module is configured to use said angular position data to convert said quadrature voltage control signal and said direct voltage control signal to a reference frame of said rotor and thence to said reference frame of said control stator winding.

3. A brushless doubly fed machine (BDFM) as claimed in claim 1 or 2 wherein said direct voltage control signal source comprises a third control module coupled to said first input to control said direct voltage control signal to control a component of reactive power supplied to said ac mains power supply by said power stator winding.

**4.** A brushless doubly fed machine (BDFM) as claimed in claim 3 wherein said direct voltage control signal source includes a power factor input to receive a target power factor signal, and wherein said control module is configured to control said direct voltage control signal responsive to a difference between a reactive power component defined by said target power factor signal and a reactive power component determined from said current signal and said voltage signal from said power stator winding.

**5.** A brushless doubly fed machine (BDFM) as claimed in claim 3 or 4 wherein said control stator winding driver includes a converter to drive or receive power to or from said control stator winding, wherein said third control module is coupled to said converter to receive converter reactive power data defining a component of reactive power supplied to said ac mains power supply by said converter, and wherein said third control module is configured to control said reactive power supplied to said ac mains power supply responsive to said component of reactive power supplied to said ac mains power supply by said converter.

**6.** A brushless doubly fed machine (BDFM) as claimed in claim 5 further comprising one or more capacitors or sets of capacitors connected across said machine, and wherein said third control module is further configured to control said reactive power supplied to said ac mains power supply responsive to a reactive component of power provided by said one or more capacitors or sets of capacitors.

**7.** A controller for a brushless doubly fed machine (BDFM), the controller being as defined in any one of claims 1 to 6.

**Patentansprüche**

**1.** Bürstenlose doppeltgespeiste Maschine (BDFM) (100) für eine Kopplung mit einer Wechselstromnetz-Stromversorgungsleitung, um Strom der Wechselstromnetz-Stromversorgungsleitung (102) zuzuführen, wobei die Maschine aufweist: einen Wechselstrommetz-Stromversorgungsleitungsanschluss; einen bürstenlosen doppeltgespeisten Motor oder Generator, wobei der bürstenlose doppeltgespeiste Motor oder Generator einen Rotor (208) aufweist; eine Stromstatorwicklung (S1), um eine Wechselstromversorgung von der Maschine zum Wechselstromnetz-Stromversorgungsleitungsanschluss bereitzustellen; einen Regler (214), der mit dem Wechselstromnetz-Stromversorgungsleitungsanschluss gekoppelt ist; eine Steuerstatorwicklung (S2), die vom Regler angetrieben wird; und einen Sensor (212), der mit dem Regler gekoppelt ist, wobei die Wechselstromnetz-Stromversorgung eine Dreiphasenstromversorgung aufweist, und

dadurch gekennzeichet, dass der Sensor ausgebildet ist, um die Drehung des Rotors zu ermitteln, und dadurch, dass der Regler aufweist:

einen ersten Eingang, um ein Stromsignal ($I_1$) und ein Spannungssignal ($V_1$) von der Stromstatorwicklung auszunehmen;

einen zweiten Eingang, um ein Stromsignal ($I_2$) und ein Spannungssignal ($V_2$) von der Steuerstatorwicklung aufzunehmen;

einen dritten Eingang, um ein Signal vom Drehungssensor aufzunehmen, um Winkelpositionsdaten für ($\theta r$) und Winkeldrehzahldaten ($\omega r$) vom Rotor zu liefern;

ein erstes Steuermodul (214; 500), das mit dem dritten Eingang gekoppelt und ausgebildet ist, um ein Drehmomentbedarfssignal (Tref) aus den Winkeldrehzaldaten und der Information zu erzeugen, die eine Zielwinkeldrehzahl des Rotors definiert, und das einen Drehmomentbedarfssignalausgang aufweist;

ein Drehmomentschätzungsmodul (506), das mit dem ersten und zweiten Eingang gekoppelt und ausgebildet ist, um ein Drehmomentschätzungssignal (Test) aus den Strom- und Spannungssignalen von der Stromstatorzwicklung und den ermittelten Strom- und Spannungssignalen von der Steuerstatorwicklung zu erzeugen, wobei das Drehmomentschätzungssignal von einem Widerstandsdrehmoment abhängig ist, das vom Motor oder Generator zur Anwendung gebracht wird, wobei das Drehmomentschätzungsmodul einen Drehmomentschätzungssignalausgang aufweist;

ein zweites Steuermodul (520), das mit dem Drehmomentbedarfssignalausgang des ersten Steuermoduls und mit dem Drehmomenentschätzungssignalausgang des Drehmomentschätzungsmoduls gekoppelt ist und einen Querspannungssteuerausgang (522) aufweist, um ein Querspannungssteuersignal zu liefern;

eine Gleichspannungssteuersignalquelle (501) mit einem Gleichspannungssteuerausgang;

ein Spannungsbezugsrahmenumwandlungsmodul (404), das mit dem Querspannungssteuerausgang, mit dem Gleichspannungssteuerausgang und mit dem dritten Eingang gekoppelt ist, um einen Bezugsrahmen des Querspannungssteuersignals und des Gleichspannungssteuersignals in Ausgangsquer- und Ausgangsgleichspannungssignale in einem Bezugsrahmen der Steuerstatorwicklung umzuwandeln, und das einen Ausgang auf-

weist; und

einen Steuerstatorwicklungtreiber (214; 104b), der mit der Steuerstatorwicklung und mit dem Ausgang des Spannungsbezugsrahmenumwandlungsmoduls gekoppelt ist, um die Quer- und Gleichspannungssignale im Bezugsrahmen der Steuerstatorwicklung in ein Dreiphasenspannungssteuersignal für das Bereitstellen eines Dreiphasenantriebes bei der Steuerstatorwicklung in Übereinstimmung mit dem Dreiphasenspannungssignal umzuwandeln.

2. Bürstenlose doppeltgespeiste Maschine (BDFM) nach Anspruch 1, bei der das Spannungsbezugsrahmenumwandlungsmodul ausgebildet ist, um die Winkelpositionsdaten zu verwenden, um das Querspannungssteuersignal und das Gleichspannungssteuersignal in einen Bezugsrahmen des Rotors und daher in den Bezugsrahmen der Steuerstatorwicklung umzuwandeln.

3. Bürstenlose doppeltgespeiste Maschine (BDFM) nach Anspruch 1 oder 2, bei der die Gleichspannungssteuersignalquelle ein drittes Steuermodul aufweist, das mit dem ersten Eingang zur Steuerung des Gleichspannungssteuersignals gekoppelt ist, um eine Komponente der Blindleistung zu steuern, die der Wechselstromnetz-Stromversorgung durch die Stromstatorwicklung zugeführt wird.

4. Bürstenlose doppeltgespeiste Maschine (BDFM) nach Anspruch 3, bei der die Gleichspannungssteuersignalquelle einen Leistungsfaktoreieingang umfasst, um ein Zielleistungsfaktorsignal zu empfangen, und bei der das Steuermodul ausgebildet ist, um das Gleichspannungssteuersignal zu steuern, das auf eine Differenz zwischen einer durch das Zielleistungsfaktorsignal definierten Blindleistungskomponente und einer Blindleistungskomponente anspricht, die aus dem Stromsignal und dem Spannungssignal von der Stromstatorwicklung ermittelt wird.

5. Bürstenlose doppeltgespeiste Maschine (BDFM) nach Anspruch 3 oder 4, bei der der Steuerstatorwicklungstreiber einen Umwandler umfasst, um Strom zur oder von der Steuerstatorwicklung zu treiben oder zu empfangen, wobei das dritte Steuermodul mit dem Umwandler gekoppelt ist, um Blindleistungsdaten vom Umwandler zu empfanden, die eine Komponente der Blindleistung definieren, die der Wechselstromnetz-Stromversorgung vom Umwandler zugeführt wird, und bei der das dritte Steuermodul ausgebildet ist, um die der Wechselstromnetz-Stromversorgung zugeführte Blindleistung als Reaktion auf die Komponente der Blindleistung zu steuern, die der Wechselstromnetz-Stromversorgung vom Umwandler zugeführt wird.

6. Bürstenlose doppeltgespeiste Maschine (BDFM) nach Anspruch 5, die außerdem einen oder mehrere Kondensatoren oder Reihen von Kondensatoren, die über die Maschine angeschlossen sind, aufweist, und bei der das dritte Steuermodul außerdem ausgebildet ist, um die Blindleistung zu steuern, die der Wechselstromnetz-Stromversorgung als Reaktion auf eine Blindkomponente des Stromes zugeführt wird, die durch den einen oder mehrere Kondensatoren oder Reihen von Kondensatoren geliefert wird.

7. Regler für eine bürstenlose doppeltgespeiste Maschine (BDFM), wobei der Regler so ist, wie er in einem der Ansprüche 1 bis 6 definiert wird.

**Revendications**

1. Machine asynchrone sans balais doublement alimentée (BDFM) (100) destinée à être raccordée à une ligne d'alimentation électrique en courant alternatif pour fournir de la puissance à ladite ligne d'alimentation électrique en courant alternatif (102), la machine comprenant une connexion de ligne d'alimentation électrique en courant alternatif, un moteur ou générateur sans balais à double alimentation, ledit moteur ou générateur sans balais à double alimentation comprenant un rotor (208), un enroulement de stator de puissance (S1) permettant d'assurer une alimentation en courant alternatif de la machine vers ladite connexion de ligne d'alimentation électrique en courant alternatif un régulateur (214) couplé à ladite connexion de ligne d'alimentation électrique en courant alternatif, un enroulement de stator de réglage (S2) entraîné par ledit régulateur et un capteur (212) couplé audit régulateur, dans laquelle ladite alimentation électrique en courant alternatif comprend une alimentation en courant triphasé et **caractérisée par le fait que** ledit capteur est configuré pour détecter la rotation dudit rotor et **par le fait que** ledit régulateur comprend:

une première entrée pour recevoir un courant de signal ($I_1$) et une tension de signal ($V_1$) dudit enroulement de stator de puissance;
une deuxième entrée pour recevoir un courant de signal ($I_2$) et une tension de signal ($V_2$) dudit enroulement

de stator de réglage;

une troisième entrée pour recevoir un signal dudit capteur de rotation pour fournir des données de position angulaire ($\theta_r$) et des données de vitesse de rotation angulaire ($\omega_r$) en provenance dudit rotor;

un premier module de réglage (214; 500) couplé à ladite troisième entrée et configuré pour générer un signal de demande de couple (Tref) à partir desdites données de vitesse de rotation angulaire et d'informations définissant une vitesse de rotation angulaire cible dudit rotor, et pourvu d'une sortie de signal de demande de couple;

un module d'estimation de couple (506) couplé auxdites première et deuxième entrées et configuré pour générer un signal d'estimation de couple (Test) à partir desdits courant de signal et tension de signal provenant dudit enroulement de stator de puissance et desdits courant de signal et tension de signal détectés provenant dudit enroulement de stator de réglage, ledit signal d'estimation de couple dépendant d'un couple de résistance appliqué par ledit moteur ou générateur, ledit module d'estimation de couple étant pourvu d'une sortie de signal d'estimation de couple;

un deuxième module de réglage (520) couplé à ladite sortie de signal de demande de couple dudit premier module de réglage et à ladite sortie de signal d'estimation de couple dudit module d'estimation de couple, et pourvu d'une sortie de réglage de tension en quadrature (522) pour fournir un signal de réglage de tension en quadrature;

une source de signal de réglage de tension continue (501)pourvue d'une sortie de réglage de tension continue;

un module de conversion de cadre de référence de tension (404) couplé à ladite sortie de réglage de tension en quadrature, à ladite sortie de réglage de tension continue et à ladite troisième sortie pour convertir un cadre de référence dudit signal de réglage de tension en quadrature et dudit signal de réglage de tension continue afin de délivrer en sortie des signaux de tension en quadrature et continue dans un cadre de référence dudit enroulement de stator de réglage, et pourvu d'une sortie; et

un circuit d'attaque d'enroulement de stator de réglage (214; 104b) couplé audit enroulement de stator de réglage et à ladite sortie dudit module de conversion de cadre de référence de tension pour convertir lesdits signaux de tension en quadrature et continue dans ledit cadre de référence dudit enroulement de stator de réglage en un signal de réglage de tension triphasée pour fournir un courant d'attaque triphasé audit enroulement de stator de réglage correspondant à ladite tension de signal triphasée.

2. Machine asynchrone sans balais doublement alimentée (BDFM) selon la revendication 1, dans laquelle ledit module de conversion de cadre de référence de tension est configuré pour utiliser lesdites données de position angulaire pour convertir ledit signal de réglage de tension en quadrature et ledit signal de réglage de tension continue en un cadre de référence dudit rotor, et donc en ledit cadre de référence dudit enroulement de stator de réglage .

3. Machine asynchrone sans balais doublement alimentée (BDFM) selon la revendication 1 ou 2, dans laquelle ladite source de signal de réglage de tension continue comprend un troisième module de réglage couplé à ladite première entrée pour régler ledit signal de réglage de tension continue afin de régler une Composante de puissance réactive fournie à ladite alimentation électrique en courant alternatif par ledit enroulement de stator de puissance.

4. Machine asynchrone sans balais doublement alimentée (BDFM) selon la revendication 3, dans laquelle ladite source de signal de réglage de tension continue inclut une entrée de facteur de puissance pour recevoir un signal de facteur de puissance cible, et dans laquelle ledit module de réglage est configuré pour régler ledit signal de réglage de tension continue en réponse à une différence entre une composante de puissance réactive définie par ledit signal de facture de puissance cible et une composante de puissance réactive déterminée à partir dudit courant de signal et de ladite tension de signal provenant dudit enroulement de stator de puissance.

5. Machine asynchrone sans balais doublement alimentée (BDFM) selon la revendication 3 ou 4, dans laquelle ledit circuit d'attaque d'enroulement de stator de réglage comprend un convertisseur pour délivrer une puissance d'attaque audit enroulement de stator de réglage ou en recevoir de celui-ci, dans laquelle ledit troisième module de réglage est couplé audit convertisseur pour recevoir des données de puissance réactive de convertisseur définissant une composante de puissance reactive fournie a ladite alimentation électrique en courant alternatif par ledit convertisseur, et dans laquelle ledit troisième module de réglage est configuré pour régler ladite puissance réactive fournie à ladite alimentation électrique en courant alternatif en réponse à ladite composante de puissance réactive fournie à ladite alimentation électrique en courant alternatif par ledit convertisseur.

6. Machine asynchrone sans balais doublement alimentée (BDFM) selon la revendication 5, comprenant, en outre, un ou plusieurs condensateurs ou jeux de condensateurs branchés aux bornes de ladite machine, et dans laquelle ledit troisième module de réglage est configuré, en outre, pour régler ladite puissance réactive fournie à ladite alimentation électrique en courant alternatif en réponse à une composante de puissance réactive fournie par ledit ou lesdits condensateurs ou jeux de condensateurs.

7. Régulateur pour machine asynchrone sans balais doublement alimentée (BDFM), le régulateur étant défini selon l'une quelconque des revendications 1 à 6.

Figure 1a

FRACTIONALLY RATED FREQUENCY CONVERTER

STATOR CONTROL WINDING

50Hz / X Hz

STATOR POWER WINDING

Grid, 50Hz

BRUSHLESS DOUBLY-FED MACHINE (BDFM)

Figure 1c

CONTROL WINDING POWER

OUT

N (rpm)

Nnatural (f = 0)

IN

Figure 1b

Figure 2

Figure 3

$$Q^*_{ref} \quad pf_{ref} \quad \omega_{ref}$$

$V_1$

$I_1$

$V_2$

$I_2$

$\omega_r$

$\theta_r$

404

402

Block A

$V^{S1}_{2q}$

$V^{S1}_{2d}$

Block B

$V_{2a}$

$V_{2b}$

$V_{2c}$

Control Unit 1

214

Figure 4

Figure 5

EP 2 301 143 B1

Figure 6

GRID MAINS

THREE
PHASE GRID

POWER STATOR
WINDING

202

BDF
GENERATOR

Qcaps

THREE
PHASE

104

CONVERTER

CONTROL
STATOR
WINDING

Q CONTROL
SIGNAL

Q POWER
WINDING (Q1)

REACTIVE
POWER
CONTROLLER

702

Q target

Q NET

700

Figure 7

50Hz Mains

Fractionally rated
frequency converter

50 Hz

X Hz

Brushless Doubly-Fed
Machine (BDFM)

Figure 8

Figure 9

EP 2 301 143 B1

S300

SET INITIAL DRIVE FREQUENCY
ACCORDING TO SENSED ROTATION
SPEED

S302

RECEIVE PULSE EVENT DATA
FROM ROTATION SENSOR

S304

CALCULATE CHANGE IN
INSTANTANEOUS SPEED AND
CHANGE IN PHASE OF DRIVE
WAVEFORM TO COMPENSATE

S306

READ SINE WAVE DATA FROM
TABLE AND TIME STRETCH/
COMPRESS TO ACHIEVE DESIRED
PHASE CHANGE

S308

OUTPUT SINE WAVE DATA TO PWM
MODULE

# Figure 10

Figure 11a

Figure 11b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5929612 A
- WO 2004040748 A
- EP 1804372 A
- US 2007210651 A
- WO 2005046044 A
- WO 0191279 A
- WO 0048295 A
- WO 03026121 A
- US 5029288 A
- WO 2008150907 A
- US 20040052217 A
- US 20030052643 A
- US 20010006335 A
- US 6850033 B
- WO 2006017306 A
- US 4994684 A
- US 5028804 A
- US 5083077 A
- US 5239251 A
- US 5798631 A

### Non-patent literature cited in the description

- **B.HOPFENSPERGER ; D.J.ATKINSON.** Doubly-fed a.c. machines: classification and comparison. *Proc. 9th. European Conf. Power Electronics and Applications,* August 2001
- **P. C. ROBERTS ; R. A. MCMAHON ; P. J. TAVNER ; J. M. MACIEJOWSKI ; T. J. FLACK.** Equivalent circuit for the Brushless Doubly-Fed Machine (BDFM) including parameter estimation. *Proc. IEE B - Elec. Power App.,* July 2005, vol. 152 (4), 932-942
- **R. A. MCMAHON ; P. C. ROBERTS ; P. J. TAVNER ; X. WANG.** Performance of BDFM as a generator and motor. *Proc. IEE B - Elec. Power App.,* March 2006, vol. 153 (2), 289-299
- **P. C. ROBERTS ; T. J. FLACK ; J. M. MACIEJOWSKI ; R. A. MCMAHON.** Two stabilising control strategies for the brushless doubly-fed machine (BDFM). *Int. Conf. Power Electronics, Machines and Drives,* April 2002, 341-346
- **E. ABDI-JALEBI ; P. C. ROBERTS ; R. A. MCMAHON.** Real-time rotor bar current measurement using a rogowski coil transmitted using wireless technology. *18th Intl. Power Systems Conf. (PSC2003,* October 2003, vol. 5, 1-9
- **P. C. ROBERTS ; E. ABDI-JALEBI ; R. A. MCMAHON ; T. J. FLACK.** Real-time rotor bar current measurements using bluetooth technology for a brushless doubly-fed machine (bdfm). *Int. Conf. Power Electronics, Machines and Drives,* March 2004, vol. 1, 120-125
- **P. C. ROBERTS ; R. A. MCMAHON ; P. J. TAVNER ; J. M. MACIEJOWSKI ; T. J. FLACK ; X. WANG.** Performance of Rotors for the Brushless Doubly-fed (induction) Machine (BDFM). *Proc. 16th Int. Conf. Electrical Machines (ICEM,* 05 September 2004
- **P. C. ROBERTS ; J. M. MACIEJOWSKI ; R. A. MCMAHON ; T. J. FLACK.** A simple rotor current observer with an arbitrary rate of convergence for the Brushless Doubly-Fed (Induction) Machine (BDFM). *Proc. Proc. IEEE Joint CCA, ISIC, CACSD,* 02 September 2004
- **X. WANG ; P. C. ROBERTS ; R. A. MCMAHON.** Studies of inverter ratings of BDFM adjustable drive or generator systems. *Proc. IEEE Conf. Power Electronics and Drive Systems (PEDS) 2005,* 28 November 2005
- **X. WANG ; P. C. ROBERTS ; R. A. MCMAHON.** Optimisation of BDFM Stator Design Using an Equivalent Circuit Model and a Search Method. *Proc. Int. Conf. Power Electronics, Machines and Drives (PEMD,* 04 April 2006, vol. 1, 606-610
- **R. A. MCMAHON ; X. WANG ; E. ABDI-JALEBI ; P.J. TAVNER ; P. C. ROBERTS ; M. JAGIELA.** The BDFM as a Generator in Wind Turbines. *Int. Conf. Power Electronics and Motion Control Conference (EPE-PEMC,* 30 August 2006
- **P. J. TAVNER ; R. A. MCMAHON ; P. C. ROBERTS ; E. ABDI-JALEBI ; X. WANG ; M. JAGIELA ; T. CHICK.** Rotor & Design Performance for a BDFM. *Proc. 17th Int. Conf. Electrical Machines (ICEM,* 02 September 2006

- **D. FENG ; P. ROBERTS ; R. MCMAHON.** Control Study on Starting of BDFM. *Proc. 41st International Universities Power Engineering Conference (UPEC) 2006,* 06 September 2006
- **SEMAN S et al.** Performance Study of a Doubly Fed Wind-Power Induction Generator under Network Disturbances. *IEEE,* 2005
- **BASIC D et al.** Transient Performance Study of a Brushless Doubly Fed Twin Stator Induction Generator. *IEEE,* 2003
- **DURO BASIC et al.** *Modelling and Steady-State Performance Analysis of a Brushless Doubly Fed Twin Stator Induction Generator*
- **M. HOKKANEN ; H. J. SALMINEN ; T. VEKARA.** *A short review of models for grid-connected doubly-fed variable speed wind turbines*
- **P.C. ROBERTS ; R.A. MCMAHON ; P.J. TAVNER ; J.M. MACIEJJOWSKI ; T. J. FLACK.** Equivalent circuit for the brushless doubly fed machine (BDFM) including parameter estimation and experimental verification. *Electrical Power Applications, IEE Proceedings,* July 2005, vol. 152 (40), 933-942